# EUROPEAN PATENT APPLICATION

(11) **EP 3 499 896 A1**
(43) Date of publication of application: **19.06.2019**
(21) Application number: 17306805.7
(22) Date of filing: 18.12.2017
(51) Int. Cl.: H04N 19/597, G06T 5/00, G06T 9/00, H04N 5/367, H04N 19/85

(54) **METHOD AND APPARATUS FOR GENERATING AN IMAGE, AND CORRESPONDING COMPUTER PROGRAM PRODUCT AND NON-TRANSITORY COMPUTER-READABLE CARRIER MEDIUM**

(71) Applicant: THOMSON LICENSING, 92130 Issy les Moulineaux (FR)
(72) Inventor: FLEUREAU, Julien, 35576 Cesson Sévigné (FR); DORE, Renaud, 35576 Cesson Sévigné (FR); TAPIE, Thierry, 35 576 Cesson Sévigné (FR)
(74) Representative: Huchet, Anne

(57) **Abstract**

The present disclosure relates to a method for generating an image, comprising:
• obtaining (10):
∘ a source image, at least one pixel of said source image being a useful pixel (U) and at least one distinct pixel of said source image being a non-useful pixel (*N*); and
∘ a key information indicating whether each pixel of said source image is a useful pixel or a non-useful pixel;

• applying (11) a feathering processing on at least one pixel of said source image, called a border pixel, a border pixel being a non-useful pixel having at least one first useful neighbor pixel and at least one second non-useful distinct neighbor pixel, said feathering processing generating a modified image presenting a smooth transition between said first neighbor pixel and said second neighbor pixel.

## Description

### 1. Technical Field

The field of the disclosure is that of the image and video processing.

More specifically, the disclosure relates to a method for generating an image, so as to optimize the encoding of this image and especially to optimize the final bitrate associated with this image.

### 2. Background Art

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In the field of image coding and decoding, the decoding side needs to know/recognize some information, so as to optimize the decoding of an image. It is for example the case when certain areas in an image to be encoded contain undefined values, which should not be decoded, at the risk of producing outliers for example. Such undefined areas are also called unused areas, empty areas or holes. The pixels corresponding to such unused areas may be called non-useful pixels, in opposition to useful pixels that for example store color values.

However, the non-useful pixels of an image often have quite complex topologies and they induce quite a lot of spatial high frequencies to cope with at the video encoding step.

Therefore, there is a need for a new method for generating an image while optimizing the complexity of coding and decoding, as well as the final bitrate for the image encoding and transmission.

### 3. Summary of Invention

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method for generating an image, the method comprising:
- obtaining a source image, at least one pixel of said source image being a useful pixel and at least one distinct pixel of said source image being a non-useful pixel; and a key information indicating whether each pixel of said source image is a useful pixel or a non-useful pixel;
- applying a feathering processing on at least one pixel of said source image, called a border pixel, a border pixel being a non-useful pixel having at least one first useful neighbor pixel and at least one second non-useful distinct neighbor pixel, said feathering processing generating a modified image presenting a smooth transition between said first neighbor pixel and said second neighbor pixel.

The present disclosure thus proposes a new solution for generating an image that considerably reduces the presence of high frequencies due to the presence of non-useful pixels in unused areas, thus decreasing the bitrate associated to the image encoding. More specifically, the present disclosure aims at generating a modified image presenting smooth transitions between an unused area of the source image and an active border (i.e. a pixel with at least one neighbor corresponding to a non-useful pixel) by applying a feathering processing between pixels of an unused area and pixels of an active border.

In particular, the method comprises, before the feathering processing, setting values stored by non-useful pixels in said source image to a predetermined average value.

Indeed, as the values stored by non-useful pixels may be extreme regarding the range of values stored by useful pixels (for example black color for the color map and 0 value for the distance map) and thus lead to spatial high frequencies in the image, setting values of non-useful pixels to a predetermined average value thus reduces the difference between values stored by useful pixels and values stored by non-useful pixels. In this way, the maximum gap between a useful pixel and a non-useful pixel is half of the maximum gap in the source image. For example, the average value corresponds to grey color (RGB = (0.5, 0.5, 0.5)) for replacing black color stored by non-useful pixels in a color map, and the average value corresponds to a 0.5 value for replacing a 0 value stored by non-useful pixels in a distance map.

The transition between the used and the unused areas is thus lower and easier to encode.

According to at least one embodiment, said predetermined average value depends on the highest and the lowest values stored by useful pixels of said source image.

In this way, by taking into account the values stored by the useful pixels for defining the average value, the transition between the used and the unused areas can be optimized as the maximum gap between a useful pixel and a non-useful pixel is reduced.

According to at least one embodiment, the feathering processing comprises setting the value stored by said at least one border pixel to a padding value computed from at least the value stored by said first neighbor pixel and the value stored by said second neighbor pixel.

In this way, the padding value aims at building a smooth transition between the unused areas and the useful pixels, so as to decrease again the amount of high frequencies in the image. Indeed, instead of the brutal transition existing in the source image between the value stored by a useful pixel and an extreme value stored by a non-useful border pixel, using a padding value leads to a smooth transition, as said padding value is computed as an intermediate value between the value stored by said first neighbor pixel and the value stored by said second neighbor pixel.

It is to be noted that if the values stored by the non-useful pixels have already been set to an average value, the values stored by the border pixels are thus modified from said average value to said padding value.

According to at least one embodiment, said feathering processing corresponds to the Laplacian feathering.

According to at least one embodiment, the method comprises, before the feathering processing, applying an edge-preserving processing by setting the value stored by said at least one border pixel to the value of said first neighbor pixel.

In this way, the video coding of the modified image is enhanced on the specific areas corresponding to the borders between non-useful and useful pixels, known to be quite sensitive, so as to limit the errors during the decoding.

Indeed, on the decoding side, an error (even small) on the border in an image may have quite undesirable visual effects. Thus, to preserve the border as much as possible when encoding the image, a flat area around the borders is artificially created by a simple expansion of values stored by the border pixels.

According to at least one embodiment, said edge-preserving processing is also applied on at least said second neighbor pixel.

According to at least one embodiment:
- said predetermined average value corresponds to a grey value if said source image corresponds to a color map with pixels storing color values;
- said predetermined average value corresponds to 0,5 if said source image corresponds to a distance map with pixels storing distance values;
- said predetermined average value corresponds to a two-tuple (grey, 0,5) (i.e. (RGB (0.5, 0.5, 0.5), 0.5) if said source image corresponds to a color and distance map with pixels storing useful values corresponding to color and distance values.

According to at least one embodiment, said key information corresponds to a key map having a size equal to a size of said source image, and pixels of said key map store a Boolean value indicating whether each pixel of said source image is a useful pixel or a non-useful pixel.

Thus, according to this embodiment, the present disclosure combines the use of an additional extra key map and some dedicated padding operations on the source image to both transmit the information related to unused areas and decrease the bitrate associated to the modified image encoding.

According to at least one embodiment, said key information is stored in the value stored by pixels of said source image as a key-value.

Another aspect of the present disclosure relates to a computer program product downloadable from a communication network and/or recorded on a medium readable by computer and/or executable by a processor comprising software code adapted to perform the above-mentioned method for generating an image, in any of its embodiments, when it is executed by a computer or a processor.

In addition, another aspect of the present disclosure relates to a non-transitory computer-readable carrier medium storing a computer program product which, when executed by a computer or a processor, causes the computer or the processor to carry out the above-mentioned method for generating an image, in any of its embodiments.

The present disclosure also pertains to an apparatus for generating an image, the apparatus comprising at least one processor adapted and configured to:
- obtain a source image, at least one pixel of said source image being a useful pixel and at least one distinct pixel of said source image being a non-useful pixel; and a key information indicating whether each pixel of said source image is a useful pixel or a non-useful pixel;
- apply a feathering processing on at least one pixel of said source image, called a border pixel, a border pixel being a non-useful pixel having at least one first useful neighbor pixel and at least one second non-useful distinct neighbor pixel, to generate a modified image presenting a smooth transition between said first neighbor pixel and said second neighbor pixel.

Such apparatus is particularly adapted for implementing the method for generating an image according to the present disclosure. It could comprise the different characteristics pertaining to the method according to any embodiment of the disclosure, which can be combined or taken separately. In other words, such a system is adapted to carry out any of the execution modes of the method for generating an image according to the present disclosure. Thus, the characteristics and advantages of this apparatus are the same as the disclosed method for generating an image in any of its different embodiments.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### 4. Brief Description of Drawings

The disclosure will be better understood and illustrated by means of the following embodiment and execution examples, in no way limitative, with reference to the appended figures in which:
- Figure 1 is a flow chart illustrating the main steps for generating an image according to an embodiment of the disclosure;
- Figure 2a to 2c illustrate examples of pixels of an image in different states during the processing of the method according to an embodiment of the disclosure;
- Figure 3 illustrates an example of pixels of an image according to another embodiment of the disclosure;
- Figures 4a and 4b illustrate an example of images with unused areas and a key map before the implementation of the method of the present disclosure;
- Figure 5a and 5b illustrate modified images generated according to an embodiment of the disclosure corresponding to the images of figures 4a and 4b;
- Figure 6 is a schematic illustration of the structural blocks of an exemplary apparatus that can be used for implementing the disclosed method according to an embodiment of the disclosure.

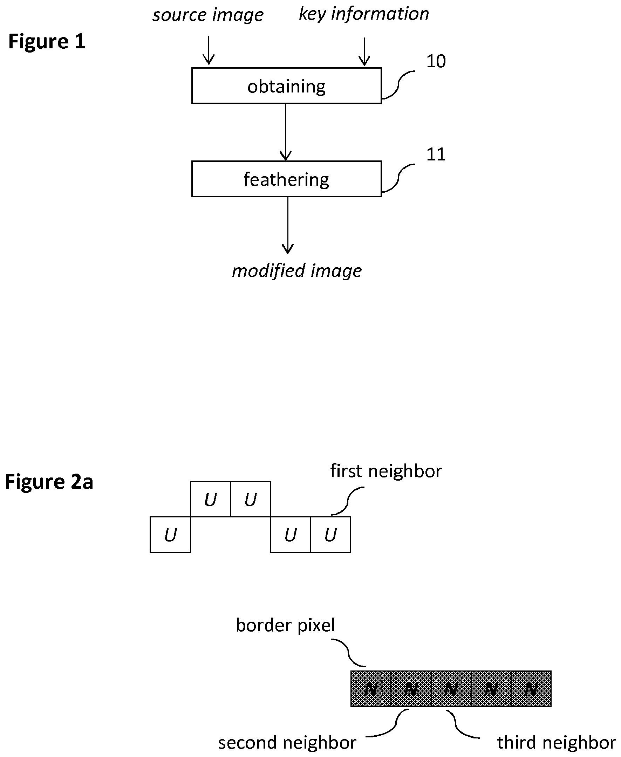

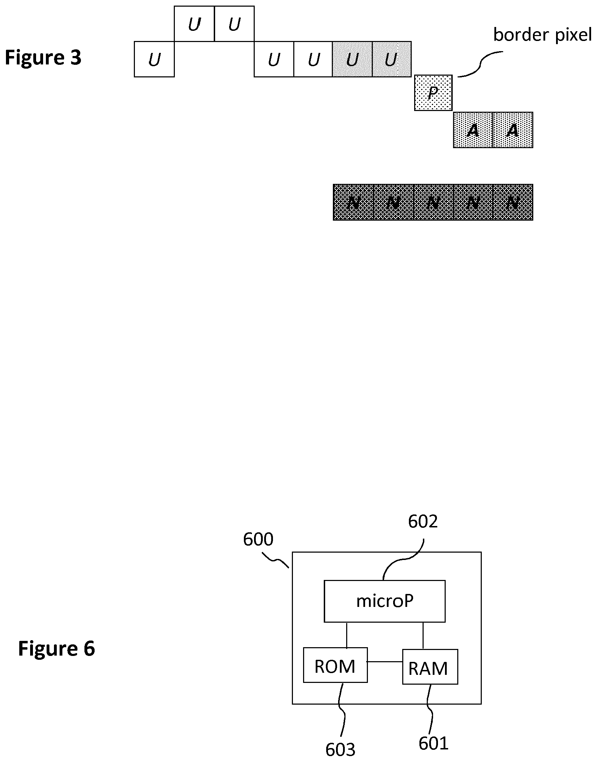

In Figures 1 and 6, the represented blocks are purely functional entities, which do not necessarily correspond to physically separate entities. Namely, they could be developed in the form of software, hardware, or be implemented in one or several integrated circuits, comprising one or more processors.

### 5. Description of Embodiments

In all of the figures of the present document, the same numerical reference signs designate similar elements and steps.

The subject matter is now described with reference to the drawings, wherein like reference numerals are used to refer to like elements throughout. In the following description, for purposes of explanation, numerous specific details are set forth in order to provide a clear understanding of the subject matter. It can be evident, however, that subject matter embodiments can be practiced without these specific details.

The present description illustrates the principles of the present disclosure. It will thus be appreciated that those skilled in the art will be able to devise various arrangements that, although not explicitly described or shown herein, embody the principles of the disclosure.

The general principle of the disclosed method is based on some dedicated padding operations on a source image so as to considerably reduce the presence of high frequencies due to the presence of unused areas in this image and thus decrease the bitrate associated with the encoding and transmission of this image.

The main steps of the method for generating an image according to an embodiment of the disclosure are illustrated in **figure 1****.** Such method can be implemented in an apparatus, that takes a source image in input and that delivers a modified image as output.

In block 10 a source image and key information are obtained, at least one pixel of said source image being a useful pixel (U) and at least one distinct pixel of said source image being a non-useful pixel (N). Moreover, said key information indicates whether each pixel of said source image is a useful pixel or a non-useful pixel.

In block 11 a feathering processing is applied on at least one pixel of said source image previously obtained, said pixel being identified as a border pixel with at least one first useful neighbor pixel and at least one second non-useful distinct neighbor pixel. It is to be noted that identifying a border pixel can be done thanks to the key information previously obtained.

The feathering processing generates a modified image, to be encoding for example, presenting a smooth transition "around" the border pixel, i.e. between its first neighbor pixel and its second neighbor pixel, thanks to a modification of the value stored by the border pixel. Indeed, as further illustrated with **figures 2a to 2c** **and** **figure 3****,** the feathering processing comprises setting the value stored by border pixels to an intermediate value computed from at least the value stored by their first useful neighbor pixels and their second non-useful distinct neighbor pixels.

For example, **figure 2a** illustrates a specific area of a source image wherein five useful pixels U and five non-useful pixels *N* are represented. It is to be noted that the values stored respectively by the useful and the non-useful pixels are so distant, according to the range of values stored by useful pixels, that they introduce spatial high frequencies that are known to be encoded with difficulty with a regular video encoder.

Thus, according to an embodiment of the present disclosure, a first operation is applied to the non-useful pixels, identified thanks to the previously obtained key information, comprising setting the value *N* stored by the non-useful pixels to an average value *A*. This average value *A* can be predetermined so that the maximum gap between a useful pixel and a border pixel in the modified image is half of the one in the source image.

For example, if the source image is a color map with pixels storing color values and non-useful pixels storing black value, said predetermined average value corresponds to a grey value.

In another example, if said source image corresponds to a distance map with pixels storing distance values, normalized between 0 and 1 for the encoding, and non-useful pixels storing a 0 value, said predetermined average value corresponds to 0,5, i.e. the average value of the encoding range.

In another example, if said source image corresponds to a color and distance map with pixels storing useful values corresponding to color and distance values, said predetermined average value corresponds to the couple of values (grey, 0.5), that may be written (RGB (0.5, 0.5, 0.5), 0.5).

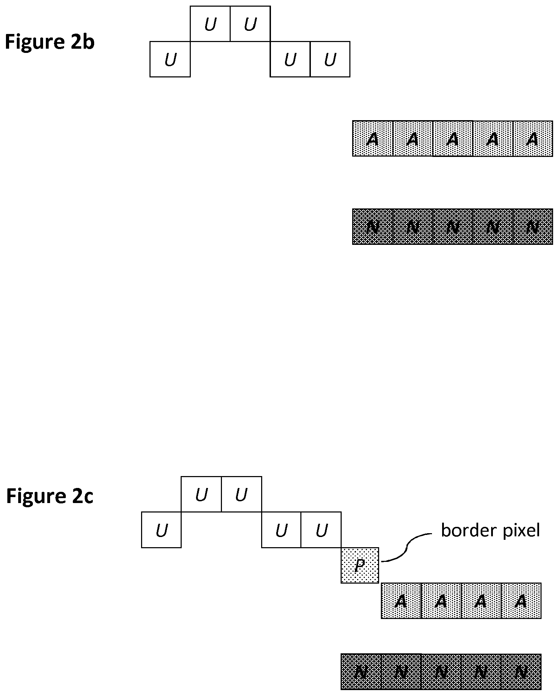

This first operation of setting an average value A aims at obtaining transitions between non-useful and useful areas that are lower and easier to encode, and delivers a first modified image from the source image, as illustrated for example in **figure 2b****,** wherein the value *N* stored by the non-useful pixels in the source image are still represented to be compared with the average value A. This first operation is optional and can be skipped, so that the feathering described below corresponds to the first processing applied to the source image.

Then, a feathering is applied on said first modified image, or directly on the source image, by setting the value stored by the border pixel (possibly previously set to the predetermined average value *A*) to a padding value *P* computed at least from the values stored by the two neighbor pixels of said border pixel.

For example, the feathering processing corresponds to a Laplacian feathering, well known from the man skilled in the art. The Laplacian feathering is an image processing technique and more precisely, an in-painting algorithm used to fill the holes/missing parts of an image in a smooth/seamless manner. It basically associates to the pixels belonging to the missing parts of an image, a color/gray value that minimizes the induced color/gray gradient on the part to fill. To that end, a discretized version of the well-known Poisson's equation is solved on the set defined by the missing part and with border conditions given by the surrounding known neighborhood of pixels (the pixels which surround the hole/missing part). Very simple and efficient iterative algorithms exist to solve such a problem that can be straightforwardly implemented on a GPU for example.

Other feathering processing aiming at building a smooth transition between the unused areas (with non-useful pixels) and the useful pixels can be implemented, so as to generate a second modified image wherein the amount of high frequencies is again decreased.

Such a second modified image is for example illustrated in **figure 2c****,** wherein the value *N* stored by the non-useful pixels in the source image are still represented to be compared with the average value *A* and the padding value *P*.

According to another embodiment of the disclosure, a special extra "edge-preserving" processing is applied to the first modified image, or to the source image, before the feathering processing, so as to preserve the border as much as possible when encoding the video. This "edge-preserving" processing can also be applied before the first operation of setting the value *N* stored by the non-useful pixels to an average value *A*. Thus, this "edge-preserving" processing comprises setting the value *N* stored by a border pixel to the value stored by said first neighbor useful pixel, thus artificially expanding the border values by creating a "flat area" around the borders.

The **figure 3****,** wherein the value *N* stored by the non-useful pixels in the source image are still represented to be compared with the average value *A* and the padding value *P*, illustrates the modified image generated after:
- setting the value *N* stored by the non-useful pixels in a source image to an average value *A*, delivering a first modified image;
- "edge-preserving" processing on a border pixel and its second neighbor in the first modified image, thus delivering a second modified image wherein the border pixel now corresponds to the pixel identified in the source image (**figure 2a**) as the third neighbor pixel;
- feathering processing on the border pixel of the second modified image, generating a modified image wherein the transition between the second neighbor pixel and the last two non-useful pixels is thus lower and easier to encode, thus decreasing the bitrate and enhancing the border aspect on decoding side.

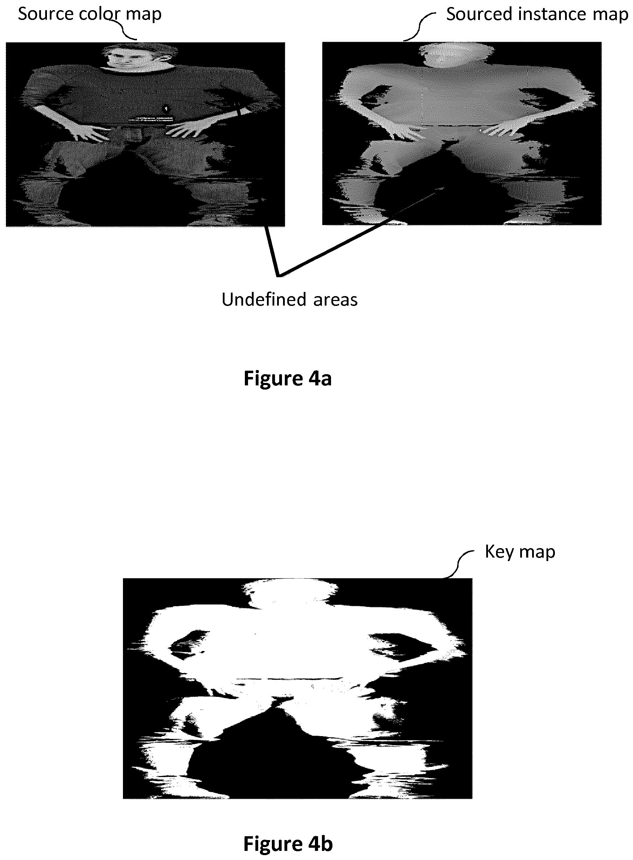

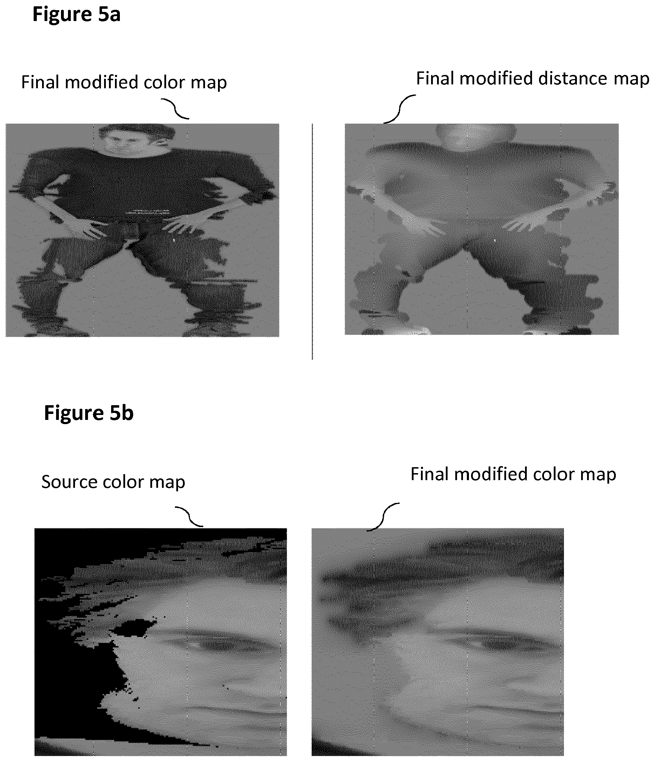

**Figures 4a** and **4b****,** **5a** and **5b,** illustrate an example of images for which the method of the present disclosure allows to reduce considerably the bitrate.

The source images obtained by the method of the present disclosure correspond to a color map and/or a depth/distance map obtained after projection on a parametric surface of a points cloud representing at least one part of an object in a multimedia content, as illustrated in **figure 4a****,** and unused areas. These unused areas typically correspond to non-projected points, also called non-useful pixels.

A known solution for "informing" the decoder of the presence of these non-useful pixels would then consist in transmitting the information, called key information, whether a value should be decoded or not, i.e. whether a pixel is a useful one or a non-useful one.

For example, this key information can be transmitted as an additional binary map, namely a "key map" (illustrated in **figure 4b**, corresponding to the color and distance maps of **figure 4a**), which have a size equal to the size of said source images, pixels of said key map storing a Boolean value indicating whether each pixel of said source images is a useful pixel or a non-useful pixel. This key map thus would disambiguate the task on the decoding side.

It is also well known to reserve a value, in a source image, for example in the distance map, so as to embed key information needed at the decoding side. This case will be discussed later.

As already said, in the case of color and distance maps, the unused areas, often complex, are for example filled with black color for the color map and 0 value for the distance map. However, such a way to fill the unused areas introduces a lot of spatial high frequencies in the image that are known to be encoded with difficulty with a regular video encoder. As a result, the final bitrate may be considerably impacted.

To overcome this difficulty, steps of feathering according to an embodiment of the present disclosure are applied to these two maps before the encoding step in order to considerably reduce the presence of high frequencies.

According to the example illustrated in **figures 4a and 4b****,** wherein the key information corresponds to a key map, the method of the present disclosure first obtains:
- a source color map and a source distance map (**figure 4a****,** respectively left and right sides), wherein pixels are storing respectively color values and distance values;
- a key map (**figure 4b**), having a size equal to the size of said color map (or distance map), pixels of said key map storing a Boolean value indicating whether each pixel of said color map (or distance map) is a useful pixel or a non-useful pixel.

Then, the values stored by non-useful pixels of the color map and the distance map are set to an average value A corresponding respectively to a grey value and to 0,5, thus delivering a modified color map and a modified distance map. These modified color and distance maps are then used to apply the feathering processing, on all the non-useful pixels identified as border pixels.

First of all, a Laplacian feathering is directly applied on all non-useful pixels identified as border pixels in the modified color map, by setting the value *A color* stored by said border pixels to a padding value *Pcolor* computed from at least the value U stored by their first neighbor pixels and the value *Acolor* stored by their second neighbor pixels. This feathering generates a final modified color map, illustrated for example on the left side of **figure 5a. Figure 5b** illustrates a zoom on a specific area of respectively the whole source color map (left side of **figure 5b****)** and the whole final modified color map (right side of **figure 5b****).** On this last figure, it can be noted that the transitions between non-useful pixels and useful pixels have been considerably reduced.

Secondly, an edge-preserving processing is applied on all non-useful pixels identified as border pixels in the modified distance map, by setting the value *Adistance* stored by said border pixels to the value U stored by their first neighbor pixels. This edge-preserving processing can be applied iteratively on the pixels previously identified as the second neighbor pixels of border pixels, and delivers a second modified distance map. After that, a Laplacian feathering is applied on all non-useful pixels identified as border pixels in the second modified distance map, by setting the value *Adistance* stored by said border pixels to a padding value *Pdistance* computed from at least the value *U* stored by their first neighbor pixels (in the second modified distance map) and the value *Adistance* stored by their second neighbor pixels (in the second modified distance map). This feathering generates a final modified distance map, illustrated for example on the right side of **figure 5a****.** On this last figure, it can be noted that the transitions between non-useful pixels and useful pixels have been considerably reduced, and that borders have been preserved as much as possible thanks to the edge-preserving processing applied before the Laplacian feathering.

Combining these operations on the images illustrated in **figures 4a** and **4b****,** **5a** and **5b****,** typically makes the bitrate decrease from 1.36 Mbps to 0.86 Mbps for the color map and visually enhances the border aspect on the decoding side.

It is noteworthy to mention that such a method according to the present disclosure has no negative effect on the decoding side thanks to the use of the information key map which contains the information related to the exact areas to un-project.

According now to another example wherein the key information is embedded in the source distance map, the feathering processing of the present disclosure, as previously described, is only applied on the source color map. Indeed, as the key information is embedded in the value stored by pixels of the source distance map, these values cannot be modified, either with an average value or with a padding value. Thus, the method of the disclosure generates a modified color map, as for example illustrated in the left side **figure 5a****.**

According to another embodiment wherein the source image obtained by the method of the disclosure is a color and distance map, pixels thereof storing values of color and distance. Thus, the setting to average values, the edge-preserving processing and the feathering processing can be applied on this source color and distance map, as described here above according to previous embodiments, thus generating a modified color and distance map wherein spatial high frequencies have been considerably reduced.

Referring now to **figure 6****,** the structural blocks of an exemplary apparatus that can be used for implementing the method generating an image, is illustrated, according to any of the embodiments disclosed above in relation with **figures 1 to 5b****.**

In an embodiment, an apparatus 600 for implementing the disclosed method comprises a non-volatile memory 603 (e.g. a read-only memory (ROM) or a hard disk), a volatile memory 601 (e.g. a random access memory or RAM) and a processor 602. The non-volatile memory 6303 is a non-transitory computer-readable carrier medium. It stores executable program code instructions, which are executed by the processor 602 in order to enable implementation of the method described above in its various embodiments.

Upon initialization, the aforementioned program code instructions are transferred from the non-volatile memory 603 to the volatile memory 601 so as to be executed by the processor 602. The volatile memory 601 likewise includes registers for storing the variables and parameters required for this execution.

According to an embodiment, the apparatus comprises at least one processor adapted and configured to:
- obtain:
   ∘ a source image, at least one pixel of said source image being a useful pixel and at least one distinct pixel of said source image being a non-useful pixel; and
   ∘ a key information indicating whether each pixel of said source image is a useful pixel or a non-useful pixel;
- apply a feathering processing on at least one pixel of said source image, called a border pixel, a border pixel being a non-useful pixel having at least one first useful neighbor pixel and at least one second non-useful distinct neighbor pixel, to generate a modified image presenting a smooth transition between said first neighbor pixel and said second neighbor pixel.

Naturally, the present disclosure is not limited to the embodiments previously described.

For example, the disclosed method may apply to volumetric or immersive videos.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

In other words, the disclosure is not limited to a purely software-based implementation, in the form of computer program instructions, but that it may also be implemented in hardware form or any form combining a hardware portion and a software portion.

## Claims

1. A method for generating an image, the method comprising:
• obtaining (10):
o a source image, at least one pixel of said source image being a useful pixel (U) and at least one distinct pixel of said source image being a non-useful pixel (N); and
o a key information indicating whether each pixel of said source image is a useful pixel or a non-useful pixel;
• applying (11) a feathering processing on at least one pixel of said source image, called a border pixel, a border pixel being a non-useful pixel having at least one first useful neighbor pixel and at least one second non-useful distinct neighbor pixel, said feathering processing generating a modified image presenting a smooth transition between said first neighbor pixel and said second neighbor pixel.

2. The method for generating an image according to claim 1, wherein the method comprises, before the feathering processing, setting values stored by non-useful pixels in said source image to a predetermined average value (A).

3. The method for generating an image according to claim 1 or 2, wherein the feathering processing comprises setting the value stored by said at least one border pixel to a padding value (P) computed from at least the value stored by said first neighbor pixel and the value stored by said second neighbor pixel.

4. The method for generating an image according to claim 3, wherein said feathering processing corresponds to the Laplacian feathering.

5. The method for generating an image according to any of claims 1 to 4, wherein the method comprises, before the feathering processing, applying an edge-preserving processing by setting the value stored by said at least one border pixel to the value stored by said first neighbor pixel.

6. The method of claim 5, wherein said edge-preserving processing is also applied on at least said second neighbor pixel.

7. The method for generating an image according to any of claims 1 to 6, wherein:
• said predetermined average value corresponds to a grey value if said source image corresponds to a color map with pixels storing color values;
• said predetermined average value corresponds to 0,5 if said source image corresponds to a distance map with pixels storing distance values;
• Said predetermined average value corresponds to a two-tuple (grey, 0,5) if said source image corresponds to a color and distance map with pixels storing useful values corresponding to color and distance values.

8. The method for generating an image according to any of claims 1 to 7, wherein said key information corresponds to a key map having a size equal to a size of said source image, pixels of said key map storing a Boolean value indicating whether each pixel of said source image is a useful pixel or a non-useful pixel.

9. The method for generating an image according to any of claims 1 to 7, wherein said key information is stored in the value stored by the pixels of said source image as a key-value.

10. An apparatus (600) for generating an image, the apparatus comprising at least one processor adapted and configured to:
• obtain:
∘ a source image, at least one pixel of said source image being a useful pixel and at least one distinct pixel of said source image being a non-useful pixel; and
∘ a key information indicating whether each pixel of said source image is a useful pixel or a non-useful pixel;
• apply a feathering processing on at least one pixel of said source image, called a border pixel, a border pixel being a non-useful pixel having at least one first useful neighbor pixel and at least one second non-useful distinct neighbor pixel, to generate a modified image presenting a smooth transition between said first neighbor pixel and said second neighbor pixel.

11. A computer program product downloadable from a communication network and/or recorded on a medium readable by computer and/or executable by a processor comprising software code adapted to perform a method according to anyone of claims 1 to 9 when it is executed by a processor.

12. A non-transitory computer-readable carrier medium storing a computer program product which, when executed by a computer or a processor, causes the computer or the processor to carry out the above-mentioned method according to anyone of claims 1 to 9.
